# EUROPEAN PATENT SPECIFICATION

(11) **EP 3 539 918 B1**
(45) Date of publication and mention of the grant of the patent: **30.07.2025**
(21) Application number: 18161644.2
(22) Date of filing: 14.03.2018
(51) Int. Cl.: B66D 1/50, B63B 21/16

(54) **METHOD FOR OPERATING WINCH AND ELECTRIC DRIVE FOR DRIVING WINCH**
VERFAHREN ZUM BEDIENEN EINER WINDE UND ELEKTRISCHER ANTRIEB ZUM ANTREIBEN EINER WINDE
PROCÉDÉ DE FONCTIONNEMENT DE TREUIL ET ENTRAÎNEMENT ÉLECTRIQUE D'ENTRAÎNEMENT DE TREUIL

(43) Date of publication of application: 18.09.2019
(73) Proprietor: ABB Schweiz AG, 5400 Baden (CH)
(72) Inventor: Holmberg, Mikael, 00380 Helsinki (FI); Ingman, Kjell, 00380 Helsinki (FI); Rodas, Michael, 00380 Helsinki (FI)
(74) Representative: Kolster Oy Ab

(56) References cited:
- EP-A1- 2 385 011
- CN-U- 203 451 143
- GB-A- 2 013 375

## Description

### FIELD OF THE INVENTION

The invention relates to operating a winch, and to an electric drive for driving a winch.

### BACKGROUND OF THE INVENTION

Winches may be used in connection with many applications. Examples include, a mooring winch, a ramp winch or a towing winch for a vessel. Such a vessel may be a ship, a boat or generally a craft designed for water transportation in a sea, an ocean, a lake, a river, a channel, a canal, or any parts thereof, for example.

A winch may comprise a winch drum rotatable about an axis and used for spooling a spoolable medium such as a cable, a rope, a wire or a chain, for example. In case of a winch used for mooring, for example, the spoolable medium is to be connected between the vessel and a point of mooring. The winch can be located either in the vessel or in the point of mooring. The point of mooring may be any point where the vessel can be moored, such as a mooring-post of a vessel landing place, e.g. a port or a pier, or an anchor or a buoy, for example. Such a winch used for the mooring, for instance, may further comprise an electric drive and an electric motor, which is configured to rotate the winch drum about the axis of rotation thereof during spooling in or spooling out of the spoolable medium. The electric drive can be an AC drive or a DC drive and the electric motor can be an AC motor, such as an asynchronous motor or a synchronous motor, or a DC motor, respectively, for example.

A mooring functionality of a winch used for mooring a vessel, for example, can control the spoolable medium that holds the vessel in place at the point of mooring by means of the electric drive. When the vessel is being moored, the tension of the spoolable medium between the vessel and the point of mooring can be automatically adjusted by suitably controlling the electric drive that controls the electric motor of the winch used for the mooring. The tension of the spoolable medium between the vessel and a point of mooring can be set and kept at an appropriate predetermined level. If the spoolable medium between the vessel and the point of mooring is too loose, the vessel will not stay in place, and if the spoolable medium is too tight, the spoolable medium might break or the operation might become unstable. Hence, electrically driven winches, such as mooring winches, may have a target to keep a stable rope tension between the winch drum and the point of mooring for the vessel.

The electric drive can be controlled such that the spoolable medium is either tightened (spooled in) or loosened (spooled out) towards a predetermined tension set point, which may be a single value or value range. And when the predetermined tension set point is reached, the tightening or loosening may be stopped. In other words, the electric motor of the winch may be controlled in a stepless way down to zero speed, when the spoolable medium tension setpoint is reached. The electrical motor is then standing still at zero speed of rotation and holds essentially constant torque to keep the tension of the spoolable medium stable.

GB 2013375 discloses an example of a ship's mooring winch system, which automatically maintains tension in the mooring rope continuously. The winch motor is a polyphase AC induction motor energised by a converter which includes a rectifier and an inverter. The frequency of the inverter output is preferably the rated slip-frequency of the motor, and the converter is controlled according to sensed motor speed and rectifier current. The motor maintains tension without exceeding its rated duty and automatically pays out or recovers rope at the rated torque, whilst stalled, without the use of rope tension sensors.

A problem related to the above solution is that the zero speed of the electric motor, when kept for a long time, can be harmful to the power electronic hardware of the electric drive supplying the electric motor. As an example, in case of a permanent magnet synchronous motor or a synchronous reluctance motor, power electronic components, such as controllable semiconductor switches and diodes, of the electric drive may have high electric currents flowing through them during the zero speed of the electric motor for a long time possibly overloading the components.

### BRIEF DESCRIPTION OF THE INVENTION

The object of the invention is thus to provide a method and an apparatus for implementing the method so as to solve or at least alleviate the above problem. The object of the invention is achieved with a method, a computer program product, an electric drive, and a winch arrangement that are characterized by what is stated in the independent claims. Preferred embodiments of the invention are described in the dependent claims.

The invention is based on the idea that after the tension of the spoolable medium has reached a predetermined tension set point value or value range and the driving speed of the electric motor has been set to zero, the electric motor is driven to alternate directions of rotation at predetermined driving speeds such that the direction of rotation is changed at a predetermined frequency.

An advantage of the invention is that an excess loading of the power electronic components of the electric drive can be avoided or at least reduced. This in turn can improve the reliability of the operation of the winch, as a risk of a component failure is diminished, and extend the lifetime of the electric drive.

### BRIEF DESCRIPTION OF THE FIGURES

In the following, the invention will be described in more detail in connection with preferred embodiments with reference to the accompanying drawings, in which
Figure 1 illustrates a winch arrangement according to an embodiment; and
Figure 2 illustrates a speed diagram according to an embodiment.

### DETAILED DESCRIPTION OF THE INVENTION

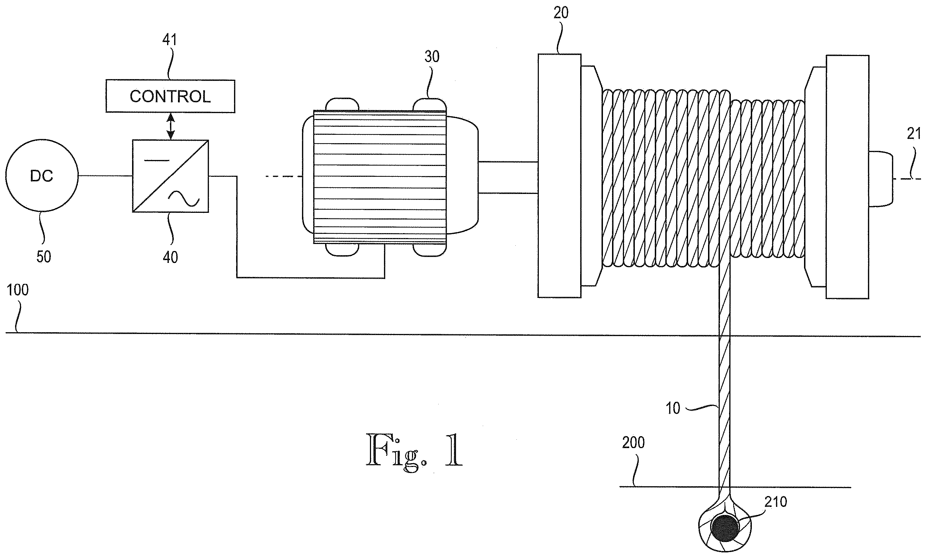

Figure 1 illustrates a simplified diagram of a winch arrangement according to an embodiment. The exemplary winch arrangement of Figure 1 can be used for mooring a vessel, for example. The figure only shows components necessary for understanding the various embodiments. The exemplary winch arrangement comprises a winch drum 20 for spooling a spoolable medium 10, which winch drum is rotatable about an axis of rotation 21. The spoolable medium 10 may comprise a cable, a rope, a wire, a chain or a combination thereof, for example. In the example of Figure 1, the winch arrangement further comprises an electric motor 30, which is operably coupled to the winch drum 20 such that the winch drum can be rotated with the electric motor 30. The electric motor 30 may be connected to the winch drum 20 directly or via one or more other components or devices, such as a gearbox (not shown in the figure). The electric motor 30 driving the winch drum 20 can be of any type, such as an asynchronous AC motor, such as an induction motor, a synchronous AC motor or a DC motor. Possible examples of the synchronous AC motor include non-excited motors, such as a reluctance motor, a hysteresis motor and a permanent magnet motor, and DC-excited motors, for example. It should be noted that the use of the embodiments described herein is not limited to systems employing any specific fundamental frequency or any specific voltage level, for example. The winch arrangement further comprises an electric drive, which comprises an inverter 40, for feeding the electric motor 30 from a DC power supply 50. An inverter is a device used, for instance, for controlling a motor. Herein 'inverter' generally refers to an electronic device or circuitry that is able to convert direct current to alternating current. An example of the inverter is a semiconductor bridge implemented by means of controllable semiconductor switches, such as IGBTs (Insulated-Gate Bipolar Transistor) or FETs (Field-Effect Transistor), which are controlled according to a modulation or control scheme used. The control of the electric motor 30 may be implemented reliably by means of the inverter 40 in such a manner that the motor 30 accurately implements a desired speed and/or torque instruction, for example. Examples of control methods for electric drives include frequency control, flux vector control and direct torque control, for example. The inverter 40 could also be a part of a frequency converter, for instance. The exemplary embodiment of Figure 1 further comprises a separate control arrangement 41 of the electric drive, which may be used to control the inverter 40 and, thus, the electric motor 30 and to operate the winch. The control arrangement 41 may be a separate unit or a part of the inverter 40 or some other unit, for example. The control arrangement 41 may comprise suitable I/O (Input-Output) means, such as a keyboard and display unit or another separate terminal unit, which may be connected to the control arrangement 41 in a wired or wireless manner. Thus, an operator or a user of the winch arrangement can operate the winch through such I/O means, for instance.

Figure 1 further illustrates a fixing point 210 for the spoolable medium 10, wherein the end of the spoolable medium 10 is to be fixed to the fixing point 210 during the mooring of the vessel, for example. According to an embodiment, the winch arrangement 20, 30, 40, 41 may be used for the mooring of the vessel and can be located in the vessel. In that case the fixing point 210 for the spoolable medium 10 is located at the point of mooring, such as a mooring-post of a vessel landing place, e.g. a port or a pier, or an anchor or a buoy, for example. According to this embodiment, reference numeral 100 in Figure 1 refers to the vessel and reference numeral 200 refers to the point of mooring. According to an alternative embodiment, the winch arrangement 20, 30, 40, 41 may be used for mooring the vessel and can be located in the point of mooring, i.e. outside of the vessel. In that case the fixing point 210 for the spoolable medium 10 is located in the vessel. According to this alternative embodiment, reference numeral 200 in Figure 1 refers to the vessel and reference numeral 100 refers to the point of mooring.

According to an embodiment, a winch can be operated as follows. A tension of the spoolable medium 10 is monitored. The monitoring of the tension of the spoolable medium 10 may be performed essentially continuously during the operation of the winch. According to an embodiment, the tension of the spoolable medium 10 can be monitored by monitoring a torque of the electric motor 30 or a quantity indicative of the torque of the electric motor 30. According to an embodiment, the torque of the electric motor 30 can be monitored by monitoring a current of the electric motor. It also possible to monitor the tension of the spoolable medium 10 by utilizing some other quantity or quantities indicative of the tension of the spoolable medium 10. The monitoring of the tension of the spoolable medium 10 can be performed by the electric drive, e.g. by the control unit 41 thereof, or some other possible separate device or system. The winch drum 20 is driven with the electric motor 30 such that the monitored tension of the spoolable medium 10 reaches a predetermined tension set point value or value range, and, in response to the monitored tension of the spoolable medium 10 reaching the predetermined tension set point value or value range, the driving speed of the electric motor 30 is set to zero. The torque of the electric motor 30 is kept essentially constant such that the monitored tension of the spoolable medium 10 has the predetermined tension set point value or it is within the predetermined tension set point value range, for instance. Then, after the setting of the driving speed of the electric motor 30 to zero, the electric motor 30 is driven to alternate directions of rotation at predetermined driving speeds such that the direction of rotation is changed at a predetermined frequency. The driving of the electric motor 30 to alternate directions of rotation may start essentially immediately after the setting of the driving speed of the electric motor 30 to zero or there may be a predetermined delay between the setting of the driving speed of the electric motor 30 to zero and the start of the driving of the electric motor 30 driven to alternate directions of rotation, for example. The driving of the electric motor 30 to alternate directions of rotation may then be continued as long as the monitored tension of the spoolable medium 10 has the predetermined tension set point value or it is within the predetermined tension set point value range, for example.

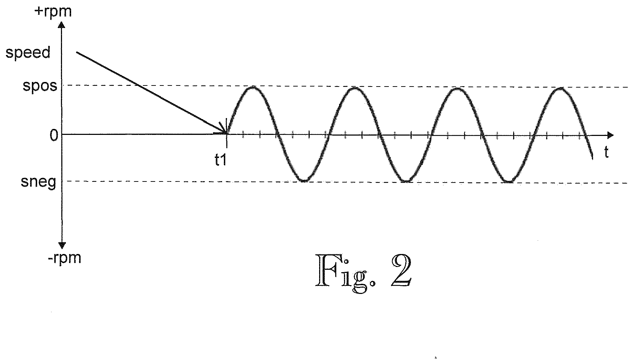

Figure 2 illustrates an example of a speed diagram, which shows the driving speed (rotational speed, rpm) of the electric motor 30 over time t. In this example the negative sign of the speed (-rpm) of the electric motor 30 indicates that the spoolable medium 10 is spooled out by the winch drum 20 and the positive sign of the speed (+rpm) of the electric motor 30 indicates that the spoolable medium 10 is spooled in by the winch drum 20. The positive and negative signs of the speed could also be defined vice versa. First, as explained above, the winch drum 20 is driven with the electric motor 30 such that the monitored tension of the spoolable medium 10 reaches the predetermined tension set point value or value range, and, in response to the monitored tension of the spoolable medium 10 reaching the predetermined tension set point value or value range, the driving speed of the electric motor 30 driving the winch drum 20 is set to zero, which in the example of Figure 2 takes place at time t1. It should be noted that while in the example of Figure 2 the speed goes to zero from a positive direction of the speed, it could also go to zero from a negative direction depending on the situation. Then, after the setting of the driving speed of the electric motor 30 to zero, i.e. time t1, the electric motor 30 is driven to alternate directions of rotation at predetermined driving speeds such that the direction of rotation is changed at a predetermined frequency. In the example of Figure 2 the value of the predetermined driving speed to the positive direction is spos and the value of the predetermined driving speed to the negative direction is sneg. The speed of the electric motor 30 changes gradually to the predetermined driving speed to the positive or negative direction depending on system characteristics. The rate of change of the speed of the electric motor 30 may also be adjusted by suitably controlling the electric drive 40, i.e. the ramp time(s) for acceleration and/or deceleration may be adjustable.

According to an embodiment, the predetermined frequency at which the direction of rotation of the electric motor 30 is changed is a constant frequency. According to another embodiment, the predetermined frequency is a variable frequency. The predetermined frequency at which the direction of rotation of the electric motor 30 is changed can be directly adjustable. The predetermined frequency at which the direction of rotation of the electric motor 30 is changed can also be indirectly adjustable by adjustment of the predetermined driving speeds to the positive and negative directions and the ramp times for acceleration and deceleration, for example. According to an embodiment, the predetermined driving speeds spos, sneg to the alternate directions of rotation are equal.

The selection of the predetermined frequency and the predetermined driving speeds of the electric motor 30 may depend on the system characteristics, for instance. They may be selected such that the driving of the electric motor 30 driven to alternate directions of rotation has as little effect as possible on the load, e.g. the spoolable medium 10. According to an embodiment, the predetermined frequency and the predetermined driving speeds are selected such that the electric motor 30 rotates, to either (positive or negative) direction of rotation, a maximum of one full rotation away from a position it had when the driving speed of the electric motor 30 was set to zero. According to an embodiment, the predetermined frequency and the predetermined driving speeds are selected such that the electric motor 30 rotates, to either direction of rotation, a maximum of half a rotation away from the position it had when the driving speed of the electric motor 30 was set to zero. Depending on system characteristics, such driving of the electric motor 30 to alternate directions of rotation a maximum of one full rotation or half a rotation, for example, may be practically unnoticeable in the actual tension of the spoolable medium, because of e.g. possible backlash or hysteresis in the system between the electric motor 30 and the spoolable medium 10.

An apparatus implementing the control functions according to any one of the above embodiments, or a combination thereof, may be implemented as one unit or as two or more separate units that are configured to implement the functionality of the various embodiments. Here the term 'unit' refers generally to a physical or logical entity, such as a physical device or a part thereof or a software routine. One or more of these units, such as the control arrangement 41, may reside in an electric drive or a component thereof, such as the inverter 40, for example.

An apparatus, such as the control arrangement 41, according to any one of the embodiments may be implemented at least partly by means of one or more computers or corresponding digital signal processing (DSP) equipment provided with suitable software, for example. Such a computer or digital signal processing equipment preferably comprises at least a working memory (RAM) providing storage area for arithmetical operations and a central processing unit (CPU), such as a general-purpose digital signal processor. The CPU may comprise a set of registers, an arithmetic logic unit, and a CPU control unit. The CPU control unit is controlled by a sequence of program instructions transferred to the CPU from the RAM. The CPU control unit may contain a number of microinstructions for basic operations. The implementation of microinstructions may vary depending on the CPU design. The program instructions may be coded by a programming language, which may be a high-level programming language, such as C, Java, etc., or a low-level programming language, such as a machine language, or an assembler. The computer may also have an operating system, which may provide system services to a computer program written with the program instructions. The computer or other apparatus implementing the invention, or a part thereof, may further comprise suitable input means for receiving e.g. measurement and/or control data, and output means for outputting e.g. control data. It is also possible to use a specific integrated circuit or circuits, or discrete electric components and devices for implementing the functionality according to any one of the embodiments.

The invention according to any one of the embodiments, or any combination thereof, can be implemented in existing system elements, such as electric drives or components thereof, such as inverters or frequency converters, or similar devices, or by using separate dedicated elements or devices in a centralized or distributed manner. Present devices for electric drives, such as inverters and frequency converters, typically comprise processors and memory that can be utilized in the functions according to embodiments of the invention. Thus, all modifications and configurations required for implementing an embodiment of the invention e.g. in existing devices may be performed as software routines, which may be implemented as added or updated software routines. If the functionality of the invention is implemented by software, such software can be provided as a computer program product comprising computer program code which, when run on a computer, causes the computer or corresponding arrangement to perform the functionality according to the invention as described above. Such a computer program code may be stored or generally embodied on a computer readable medium, such as suitable memory, e.g. a flash memory or a disc memory from which it is loadable to the unit or units executing the program code. In addition, such a computer program code implementing the invention may be loaded to the unit or units executing the computer program code via a suitable data network, for example, and it may replace or update a possibly existing program code.

It is obvious to a person skilled in the art that as technology advances, the basic idea of the invention can be implemented in a variety of ways. Consequently, the invention and its embodiments are not restricted to the above examples, but can vary within the scope of the claims.

## Claims

1. A method for operating a winch in a winch arrangement, the winch comprising a rotatable winch drum (20) for spooling a spoolable medium (10) for mooring a vessel and an electric motor (30) operably coupled to the winch drum to rotate the winch drum, the winch arrangement further comprising an electric drive comprising an inverter (40) for feeding the electric motor (30) from a DC power supply (50), and a control arrangement (41) of the electric drive, the method comprising:
monitoring by the electric drive a tension of the spoolable medium (10) between the vessel and a point of mooring; and
driving by the electric drive the winch drum (20) by driving the electric motor (30) such that the monitored tension of the spoolable medium (10) reaches a predetermined tension set point value or value range, wherein, in response to the monitored tension of the spoolable medium (10) reaching the predetermined tension set point value or value range, setting a driving speed of the electric motor (30) to zero, **characterized in that** the method comprises:
after the setting of the driving speed of the electric motor (30) to zero, driving by the electric drive the electric motor (30) to alternate directions of rotation at predetermined driving speeds such that the direction of rotation is changed at a predetermined frequency.

2. A method as claimed in claim 1, wherein the predetermined frequency is a constant frequency or a variable frequency.

3. A method as claimed in claim 1 or 2, wherein the predetermined driving speeds to the alternate directions of rotation are equal.

4. A method as claimed in claim 1, 2 or 3, wherein the predetermined frequency and the predetermined driving speeds are selected such that the electric motor (30) rotates, to either direction of rotation, a maximum of one full rotation away from a position it had when the driving speed of the electric motor (30) was set to zero.

5. A method as claimed in claim 4, wherein the predetermined frequency and the predetermined driving speeds are selected such that the electric motor (30) rotates, to either direction of rotation, a maximum of half a rotation away from the position it had when the driving speed of the electric motor (30) was set to zero.

6. An electric drive for driving a winch comprising a rotatable winch drum (20) for spooling a spoolable medium (10) and an electric motor (30) operably coupled to the winch drum to rotate the winch drum, the electric drive (40) comprising an inverter (40) and a control arrangement (41), and being configured to:
monitor a tension of the spoolable medium (10); and
drive the winch drum (20) by driving the electric motor (30) such that the monitored tension of the spoolable medium (10) reaches a predetermined tension set point value or value range, and, in response to the monitored tension of the spoolable medium (10) reaching the predetermined tension set point value or value range, set a driving speed of the electric motor (30) to zero, **characterized in that** the electric drive is configured to:
after the setting of the driving speed of the electric motor (30) to zero, drive the electric motor (30) to alternate directions of rotation at predetermined driving speeds such that the direction of rotation is changed at a predetermined frequency.

7. An electric drive as claimed in claim 6, wherein the predetermined frequency is a constant frequency or a variable frequency.

8. An electric drive as claimed in claim 6 or 7, wherein the predetermined driving speeds to the alternate directions of rotation are equal.

9. An electric drive as claimed in claim 6, 7 or 8, wherein the predetermined frequency and the predetermined driving speeds are selected such that the electric motor (30) rotates, to either direction of rotation, a maximum of one full rotation away from a position it had when the driving speed of the electric motor (30) was set to zero.

10. An electric drive as claimed in claim 9, wherein the predetermined frequency and the predetermined driving speeds are selected such that the electric motor (30) rotates, to either direction of rotation, a maximum of half a rotation away from the position it had when the driving speed of the electric motor (30) was set to zero.

11. An electric drive as claimed in any one of claims 6 to 10, wherein the electric drive (40, 41) is configured to monitor the tension of the spoolable medium (10) between the vessel and a point of mooring by monitoring a torque of the electric motor (30) or a quantity indicative of the torque of the electric motor (30).

12. A winch arrangement comprising:
a rotatable winch drum (20) for spooling a spoolable medium (10);
an electric motor (30) operably coupled to the winch drum (20) to rotate the winch drum; and
an electric drive (40, 41) according to any one of claims 6 to 11 operably coupled to the electric motor.

13. A winch arrangement as claimed in claim 12, wherein the electric motor (30) is a permanent magnet synchronous motor or a synchronous reluctance motor.

## Patentansprüche

1. Verfahren zum Betreiben einer Winde in einer Windenanordnung, wobei die Winde eine drehbare Windentrommel (20) zum Aufspulen eines aufspulbaren Mediums (10) zum Vertäuen eines Schiffes und einen Elektromotor (30), der mit der Windentrommel wirkgekoppelt ist, um die Windentrommel zu drehen, umfasst, wobei die Windenanordnung ferner einen elektrischen Antrieb, der einen Wechselrichter (40) zum Speisen des Elektromotors (30) aus einer Gleichstromversorgung (50) umfasst, und eine Steueranordnung (41) des elektrischen Antriebs umfasst, wobei das Verfahren Folgendes umfasst:
Überwachen, durch den elektrischen Antrieb, einer Spannung des aufspulbaren Mediums (10) zwischen dem Schiff und einem Vertäuungspunkt; und
Antreiben, durch den elektrischen Antrieb, der Windentrommel (20) durch Antreiben des Elektromotors (30), so dass die überwachte Spannung des aufspulbaren Mediums (10) einen vorbestimmten Spannungssollwert oder -wertebereich erreicht, wobei als Reaktion darauf, dass die überwachte Spannung des aufspulbaren Mediums (10) den vorbestimmten Spannungssollwert oder -wertebereich erreicht, eine Antriebsgeschwindigkeit des Elektromotors (30) auf Null eingestellt wird, **dadurch gekennzeichnet, dass** das Verfahren Folgendes umfasst:
nach dem Einstellen der Antriebsgeschwindigkeit des Elektromotors (30) auf Null, Antreiben, durch den elektrischen Antrieb, des Elektromotors (30) in abwechselnden Drehrichtungen mit vorbestimmten Antriebsgeschwindigkeiten, so dass die Drehrichtung mit einer vorbestimmten Frequenz geändert wird.

2. Verfahren nach Anspruch 1, wobei die vorbestimmte Frequenz eine konstante Frequenz oder eine variable Frequenz ist.

3. Verfahren nach Anspruch 1 oder 2, wobei die vorbestimmten Antriebsgeschwindigkeiten in den abwechselnden Drehrichtungen gleich sind.

4. Verfahren nach Anspruch 1, 2 oder 3, wobei die vorbestimmte Frequenz und die vorbestimmten Antriebsgeschwindigkeiten so gewählt werden, dass sich der Elektromotor (30) in jeder Drehrichtung maximal eine volle Umdrehung von einer Position weg dreht, die er hatte, als die Antriebsgeschwindigkeit des Elektromotors (30) auf Null eingestellt wurde.

5. Verfahren nach Anspruch 4, wobei die vorbestimmte Frequenz und die vorbestimmten Antriebsgeschwindigkeiten so gewählt werden, dass sich der Elektromotor (30) in jeder Drehrichtung maximal eine halbe Umdrehung von der Position weg dreht, die er hatte, als die Antriebsgeschwindigkeit des Elektromotors (30) auf Null eingestellt wurde.

6. Elektrischer Antrieb zum Antreiben einer Winde, die eine drehbare Windentrommel (20) zum Aufspulen eines aufspulbaren Mediums (10) und einen Elektromotor (30) umfasst, der mit der Windentrommel wirkgekoppelt ist, um die Windentrommel zu drehen, wobei der elektrische Antrieb (40) einen Wechselrichter (40) und eine Steueranordnung (41) umfasst und zu Folgendem ausgelegt ist:
Überwachen einer Spannung des aufspulbaren Mediums (10); und
Antreiben der Windentrommel (20) durch Antreiben des Elektromotors (30), so dass die überwachte Spannung des aufspulbaren Mediums (10) einen vorbestimmten Spannungssollwert oder -wertebereich erreicht, und als Reaktion darauf, dass die überwachte Spannung des aufspulbaren Mediums (10) den vorbestimmten Spannungssollwert oder -wertebereich erreicht, Einstellen einer Antriebsgeschwindigkeit des Elektromotors (30) auf Null, **dadurch gekennzeichnet, dass** der elektrische Antrieb zu Folgendem ausgelegt ist:
nach dem Einstellen der Antriebsgeschwindigkeit des Elektromotors (30) auf Null, Antreiben des Elektromotors (30) in abwechselnden Drehrichtungen mit vorbestimmten Antriebsgeschwindigkeiten, so dass die Drehrichtung mit einer vorbestimmten Frequenz geändert wird.

7. Elektrischer Antrieb nach Anspruch 6, wobei die vorbestimmte Frequenz eine konstante Frequenz oder eine variable Frequenz ist.

8. Elektrischer Antrieb nach Anspruch 6 oder 7, wobei die vorbestimmten Antriebsgeschwindigkeiten in den abwechselnden Drehrichtungen gleich sind.

9. Elektrischer Antrieb nach Anspruch 6, 7 oder 8, wobei die vorbestimmte Frequenz und die vorbestimmten Antriebsgeschwindigkeiten so gewählt sind, dass sich der Elektromotor (30) in jeder Drehrichtung maximal eine volle Umdrehung von einer Position weg dreht, die er hatte, als die Antriebsgeschwindigkeit des Elektromotors (30) auf Null eingestellt wurde.

10. Elektrischer Antrieb nach Anspruch 9, wobei die vorbestimmte Frequenz und die vorbestimmten Antriebsgeschwindigkeiten so gewählt sind, dass sich der Elektromotor (30) in jeder Drehrichtung maximal eine halbe Drehung von der Position weg dreht, die er hatte, als die Antriebsgeschwindigkeit des Elektromotors (30) auf Null eingestellt wurde.

11. Elektrischer Antrieb nach einem der Ansprüche 6 bis 10, wobei der elektrische Antrieb (40, 41) dazu ausgelegt ist, die Spannung des aufspulbaren Mediums (10) zwischen dem Schiff und einem Vertäuungspunkt durch Überwachen eines Drehmoments des Elektromotors (30) oder einer Größe, die das Drehmoment des Elektromotors (30) angibt, zu überwachen.

12. Windenanordnung, die Folgendes umfasst:
eine drehbare Windentrommel (20) zum Aufspulen eines aufspulbaren Mediums (10);
einen Elektromotor (30), der mit der Windentrommel (20) wirkgekoppelt ist, um die Windentrommel zu drehen; und
einen elektrischen Antrieb (40, 41) nach einem der Ansprüche 6 bis 11, der mit dem Elektromotor wirkgekoppelt ist.

13. Windenanordnung nach Anspruch 12, wobei der Elektromotor (30) ein Permanentmagnetsynchronmotor oder ein Synchronreluktanzmotor ist.

## Revendications

1. Procédé pour faire fonctionner un treuil dans un ensemble treuil, le treuil comprenant un tambour de treuil rotatif (20) pour enrouler un moyen enroulable (10) destiné à amarrer un navire et un moteur électrique (30) accouplé fonctionnellement au tambour de treuil pour faire tourner le tambour de treuil, l'ensemble treuil comprenant en outre un entraînement électrique comprenant un onduleur (40) destiné à alimenter le moteur électrique (30) à partir d'une alimentation électrique en courant continu (50), et un ensemble de commande (41) de l'entraînement électrique, le procédé comprenant :
la surveillance, par l'entraînement électrique, d'une tension du moyen enroulable (10) entre le navire et un point d'amarrage ; et
l'entraînement, par l'entraînement électrique, du tambour de treuil (20) par entraînement du moteur électrique (30) de sorte que la tension surveillée du moyen enroulable (10) atteigne une valeur ou plage de valeurs de consigne de tension prédéterminée ; dans le cas où la tension surveillée du moyen enroulable (10) atteint la valeur ou plage de valeurs de consigne de tension prédéterminée, le réglage à zéro d'une vitesse d'entraînement du moteur électrique (30), le procédé étant **caractérisé en ce qu'**il comprend :
après le réglage à zéro de la vitesse d'entraînement du moteur électrique (30), l'entraînement, par l'entraînement électrique, du moteur électrique (30) dans des sens de rotation alternés à des vitesses d'entraînement prédéterminées de sorte à changer le sens de rotation à une fréquence prédéterminée.

2. Procédé selon la revendication 1, dans lequel la fréquence prédéterminée est une fréquence constante ou une fréquence variable.

3. Procédé selon la revendication 1 ou 2, dans lequel les vitesses d'entraînement prédéterminées dans les sens de rotation alternés sont égales.

4. Procédé selon la revendication 1, 2 ou 3, dans lequel la fréquence prédéterminée et les vitesses d'entraînement prédéterminées sont sélectionnées de sorte que le moteur électrique (30) tourne, dans l'un ou l'autre sens de rotation, au maximum d'une rotation complète à partir d'une position qu'il occupait lorsque la vitesse d'entraînement du moteur électrique (30) était réglée à zéro.

5. Procédé selon la revendication 4, dans lequel la fréquence prédéterminée et les vitesses d'entraînement prédéterminées sont sélectionnées de sorte que le moteur électrique (30) tourne, dans l'un ou l'autre sens de rotation, au maximum d'une demi-rotation à partir d'une position qu'il occupait lorsque la vitesse d'entraînement du moteur électrique (30) était réglée à zéro.

6. Entraînement électrique pour entraîner un treuil comprenant un tambour de treuil rotatif (20) pour enrouler un moyen enroulable (10) et un moteur électrique (30) accouplé fonctionnellement au tambour de treuil pour faire tourner le tambour de treuil, l'entraînement électrique (40) comprenant un onduleur (40) et un ensemble de commande (41), et étant configuré pour :
surveiller une tension du moyen enroulable (10) ; et
entraîner le tambour de treuil (20) en entraînant le moteur électrique (30) de sorte que la tension surveillée du moyen enroulable (10) atteigne une valeur ou plage de valeurs de consigne de tension prédéterminée et, dans le cas où la tension surveillée du moyen enroulable (10) atteint la valeur ou plage de valeurs de consigne de tension prédéterminée, régler à zéro une vitesse d'entraînement du moteur électrique (30), l'entraînement électrique étant **caractérisé en ce qu'**il est configuré pour :
après avoir réglé à zéro la vitesse d'entraînement du moteur électrique (30), entraîner le moteur électrique (30) dans des sens de rotation alternés à des vitesses d'entraînement prédéterminées de sorte à changer le sens de rotation à une fréquence prédéterminée.

7. Entraînement électrique selon la revendication 6, dans lequel la fréquence prédéterminée est une fréquence constante ou une fréquence variable.

8. Entraînement électrique selon la revendication 6 ou 7, dans lequel les vitesses d'entraînement prédéterminées dans les sens de rotation alternés sont égales.

9. Entraînement électrique selon la revendication 6, 7 ou 8, dans lequel la fréquence prédéterminée et les vitesses d'entraînement prédéterminées sont sélectionnées de sorte que le moteur électrique (30) tourne, dans l'un ou l'autre sens de rotation, au maximum d'une rotation complète à partir d'une position qu'il occupait lorsque la vitesse d'entraînement du moteur électrique (30) était réglée à zéro.

10. Entraînement électrique selon la revendication 9, dans lequel la fréquence prédéterminée et les vitesses d'entraînement prédéterminées sont sélectionnées de sorte que le moteur électrique (30) tourne, dans l'un ou l'autre sens de rotation, au maximum d'une demi-rotation à partir d'une position qu'il occupait lorsque la vitesse d'entraînement du moteur électrique (30) était réglée à zéro.

11. Entraînement électrique selon l'une quelconque des revendications 6 à 10, l'entraînement électrique (40, 41) étant configuré pour surveiller la tension du moyen enroulable (10) entre le navire et un point d'amarrage en surveillant un couple du moteur électrique (30) ou une grandeur reflétant le couple du moteur électrique (30).

12. Ensemble treuil, comprenant :
un tambour de treuil rotatif (20) pour enrouler un moyen enroulable (10) ;
un moteur électrique (30) accouplé fonctionnellement au tambour de treuil (20) pour faire tourner le tambour de treuil ; et
un entraînement électrique (40, 41) selon l'une quelconque des revendications 6 à 11 accouplé fonctionnellement au moteur électrique.

13. Ensemble treuil selon la revendication 12, dans lequel le moteur électrique (30) est un moteur synchrone à aimants permanents ou un moteur synchrone à réluctance.
